Europäisches Patentamt

European Patent Office

Office européen des brevets

(19)

(11) Publication number: **0 078 665**
**A1**

(12) **EUROPEAN PATENT APPLICATION**

(21) Application number: **82305725.2**

(22) Date of filing: **28.10.82**

(51) Int. Cl.³: **C 03 B 9/38**

(30) Priority: **31.10.81 GB 8132881**

(43) Date of publication of application: **11.05.83** Bulletin 83/19

(84) Designated Contracting States: **BE DE FR GB IT**

(71) Applicant: **EMHART INDUSTRIES, INC., 426 Colt Highway, Farmington Connecticut 06032 (US)**

(72) Inventor: **Jones, Stanley Peter, Strafford House Bride Church Lane, Tickhill Doncaster (GB)**

(74) Representative: **Drury, Peter Lawrence et al, P.O. Box No. 88 Belgrave Road, Leicester LE4 5BX (GB)**

(54) **Cooling moulds used in forming glassware containers.**

(57) In forming glassware containers, a thermal barrier (26) is provied between a mould portion (10) and cooling means (20) which is operable to maintain a glass contact surface (14) of the mould within a desired temperature range. The cooling means comprises a metal tube (20) arranged to receive flowing cooling water and a metal fin (26) integral with and projecting from the tube (20), the end portion of the fin (26) which is remote from the tube (20) being secured to the body portion (12) of the mould portion by a joint which gives good thermal contact so that the fin (26) provides the thermal barrier.

1.

Cooling moulds used in forming
glassware containers

Technical Field

This invention is concerned with methods of cooling moulds used in forming glassware containers and with mould portions suitable for use in such methods.

Background Art

In forming glassware containers in moulds, it is necessary, if consistent results are to be achieved, to maintain the glass contact surface of the mould within a desired temperature range (typically in the range of 400 to 550$^{O}$C). To enable this to be achieved, a cooling system is provided for the mould so that heat acquired from the glass does not heat the glass contact surface above the desired range. Such cooling systems involve passing cooling air over external surfaces of the mould or through passages within the mould. The use of air as a cooling fluid, however, has the disadvantage that large quantities of air must be passed through the cooling system in order to achieve sufficient cooling effect. The use of large quantities of air requires considerable energy and creates considerable noise. It has been recognised that the use of liquid as a cooling fluid would be more efficient; however, it is found that, if cooling water is applied directly to the mould, the cooling effect is too severe and the mould may be cooled excessively in areas. To overcome this problem, there have been a number of attempts to provide a thermal barrier between the mould and the cooling system. These attempts, however, have suffered from the disadvantages either of requiring expensive technology of a type not usually available in a glassware container manufacturing factory, or of not being readily modifiable to suit different cooling requirements.

## Disclosure of Invention

It is an object of the present invention to provide an improved method of cooling a mould used in forming glassware containers which method does not suffer from the disadvantages mentioned above.

It is also an object of the present invention to provide an improved mould portion suitable for use in a glassware container forming method, the mould portion having a thermal barrier which does not suffer from the disadvantages mentioned above.

The invention provides a method of cooling a mould used in forming glassware containers so that, during use of the mould, a glass contact surface of the mould can be maintained within a desired temperature range, characterised in that the method comprises securing to an outer surface portion of the mould, a metal tube which has a metal fin integral therewith and projecting therefrom, the tube being secured by the end portion of the fin which is remote from the tube being secured to the outer surface portion of the mould so that it makes good thermal contact therewith, and passing cooling liquid through the tube.

The invention also provides a mould portion for use in glassware container forming comprising a body portion having a glass contact surface, arranged to form a portion of the glass contact surface of a mould cavity in cooperation with the glass contact surfaces of further mould portions, and an outer surface portion, arranged to be exposed when a mould cavity is formed by the mould portions, and mould cooling means secured to the outer surface portion of the body portion, characterised in that the mould cooling means comprises a metal tube arranged to receive flowing cooling liquid, and a metal fin integral with and projecting from the tube, the end portion of the fin which is remote from the tube being secured to the outer surface portion of the body portion by a joint which gives good thermal contact between the fin and the body portion.

In a method according to the last preceding paragraph but one and in a mould portion according to the last preceding paragraph, the fin provides a thermal barrier between the mould and the tube. This thermal barrier is of simple construction, is readily modifiable to suit different cooling requirements.

Preferably, in a mould portion according to the last preceding paragraph but one, selected portions of the fin are cut away so that the cooling effect of the mould cooling means is varied along the length of the tube. Alternatively or in addition, it is preferred that selected portions of the fin have metal pads secured to them by joints which give good thermal contact between the fin and the pads so that the cooling effect of the mould cooling means is varied along the length of the tube.

In order to vary the cooling effect along the length of a mould, it is preferred that the tube extends longitudinally of the mould portion and the length of the fin increases along the length of the mould portion so that the cooling effect of the mould cooling means is varied along the length of the mould portion.

Where the mould is to be used in a machine in which a plurality of moulds are used, the fin, or, where a plurality of tubes are secured to the mould portion, one or more of the fins, may be bent to reduce the overall width of the mould.

Brief description of drawings

In the drawings:

Figures 1, 2 and 3 are perspective views of portions of an illustrative mould portion;

Figure 4 is a longitudinal cross-sectional view, on a smaller scale than Figures 1, 2 and 3, of the illustrative mould portion; and

Figure 5 is a cross-sectional view taken on the line V-V in Figure 4.

Best mode of carrying out the invention

The illustrative mould portion 10 is for use in glassware container forming and is a side portion of a glass bottle mould. The mould portion 10 is arranged to cooperate with a similar side mould portion, a neck ring, and a bottom plate to enclose a mould cavity in which the bottle can be blow moulded. Although the illustrative mould portion 10 is a side mould portion of a bottle forming mould, it is to be understood that the invention can be applied to neck rings, bottom plates or moulds for making other glass articles. The invention may also be applied to more than one portion of a mould or to all such portions.

The illustrative mould portion 10 comprises a body portion 12 having a glass contact surface 14 which is arranged to form a portion of the glass contact surface of a mould cavity in cooperation with the glass contact surfaces of further mould portions (not shown). The body portion 12 also has an outer surface portion 16 which is arranged to be exposed when a mould cavity is formed by the mould portions and surface portions 18 which contact the other mould portions when a mould cavity is formed.

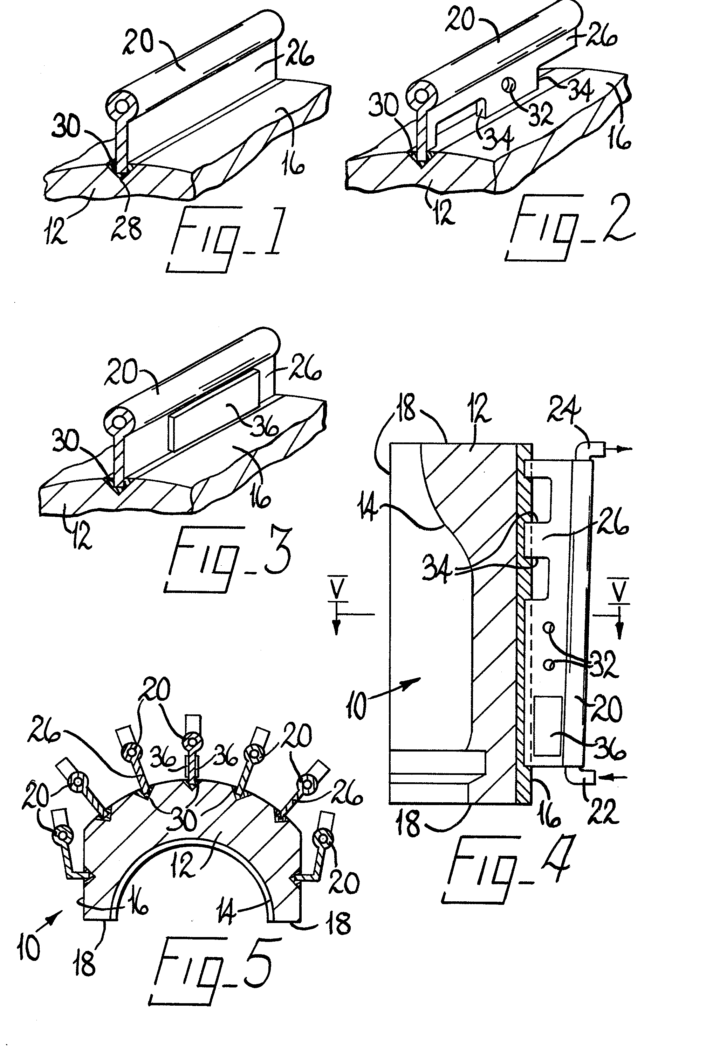

The illustrative mould portion 10 also comprises mould cooling means secured to the outer surface portion 16 of the body portion 12. The mould cooling means comprises a plurality, viz. seven, of metal tubes 20 which extend longitudinally of the mould portion 10. Since the construction of the seven tubes is generally similar, only one will be described in detail, that tube 20 being shown in Figure 1.

The tube 20 shown in Figure 1 is made of brass, although copper is another suitable material, by an extrusion process. The tube 20 is arranged to receive flowing cooling liquid, i.e. water, so that heat received by the tube 20 is

5.

carried away by the water. The tube 20 is provided with a water inlet 22 and outlet 24 (not visible in Figure 1 but shown on the tube 20 shown in Figure 4) to which supply and exhaust pipes (not shown) are clamped when the mould portion 10 is in use.

The tube 20 shown in Figure 1 is formed integrally with a metal fin 26 which projects radially from the tube 20. This fin 26 has its end portion which is remote from the tube 20 secured to the outer surface portion 16 of the body portion 12 by a joint which gives good thermal contact between the fin 26 and the body portion 12. This joint is constructed by the said end portion of the fin 26 being received in a V-shaped groove 28 in the outer surface portion 16 of the body portion 12 and being joined by solder 30 to surface portions of the groove 28. In modifications of the illustrative mould portion 10, the fin 26 may be secured to the surface portion 16 by other methods, e.g. brazing or electron beam welding.

The fin 26 provides a thermal barrier between the body portion 12 and the tube 20 which does not require expensive technology of a type not readily available in a glassware container manufacturing factory and, as will appear from the description below, is readily modifiable to suit different cooling requirements.

The fin 26 may be modified in a number of ways to vary the quantity of heat which it conducts to the tube 20 so that the cooling effect of the mould cooling means is varied along the length of the tube 20 and the illustrative mould portion 10 has fins 26 modified in three different ways.

Figure 2 shows a fin 26 in which selected portions of the fin 26 are cut away so that the cooling effect on the tube 20 is decreased at points along the length of the tube 20. A holes 32 has been drilled through the fin 26 to reduce

6.

the heat conducted thereby at that point and cut-outs 34 have been made from the end portion of the fin 26 for the same purpose.

Figure 3 shows a fin 26 in which selected portions thereof have metal pads 36 secured to them by joints, e.g. of solder, which give good thermal contact between the fin 26 and the pads 36 so that the cooling effect is increased at points along the length of the tube 20.

Figure 4 shows a fin 26 of a tube 20 which extends longitudinally of the mould portion 10 and the length of the fin 26 increases along the length of the mould portion 10 so that the cooling effect of the mould cooling means is varied along the length of the mould portion 10. This fin 26 is also provided with holes 32, cut-outs 34 and pads 36 to further vary the cooling effect.

In order to reduce the overall width of the mould portion 10 while applying the cooling effect where desired, two of the fins 26 are bent as shown in Figure 5.

The tubes 20 may be interconnected so that they form a single flow path for the cooling water or each tube 20 may be supplied separately. In the latter case, the rate of flow of cooling water is controllable separately for each of the tubes 20 so that the cooling effect can be varied around the mould portion.

The illustrative mould portion 10 is used in the illustrative method of cooling a mould used in forming glassware containers as are other mould portions which cooperate with the illustrative mould portion 10 to form a complete mould. The illustrative method is used so that, during use of the mould, a glass contact surface of the mould, partly formed by the surface portion 14, can be maintained within a desired temperature range.

In the illustrative method the metal tubes 20 are secured to an outer surface portion of the mould, partly formed by the surface portion 16, in the way described above, the fins 26 having first been modified as described above to suit the cooling effect required for the particular shape and size of mould. The mould portions are then mounted in a machine and supply and exhaust pipes are connected to the fluid inlets 22 and outlets 24 respectively. Then, during operation of the machine, cooling water is passed through the tubes 20.

Claims:

1. A method of cooling a mould used in forming glassware containers so that, during use of the mould, a glass contact surface (14) of the mould can be maintained within a desired temperature range, characterised in that the method comprises securing to an outer surface (16) of the mould, a metal tube (20) which has a metal fin (26) integral therewith and projecting therefrom, the tube (20) being secured by the end portion of the fin (26) which is remote from the tube (20) being secured to the outer surface (16) of the mould so that it makes good thermal contact therewith, and passing cooling liquid through the tube (20).

2. A method according to claim 1, characterised in that the tube (20) is secured to the outer surface (16) of the mould by inserting the end portion of the fin (26) which is remote from the tube (20) into a groove (28) in the outer surface (16) of the mould and soldering the end portion of the fin (26) to surface portions of the groove (28).

3. A mould portion (10) for use in a glassware container forming machine comprising a body portion (12) having a glass contact surface (14), arranged to form a portion of the glass contact surface of a mould cavity in cooperation with the glass contact surfaces of further mould portions, and an outer surface portion (16), arranged to be exposed when a mould cavity is formed by the mould portions, and mould cooling means secured to the outer surface portion (16) of the body portion, characterised in that the mould cooling means comprises a metal tube (20) arranged to receive flowing cooling liquid, and a metal fin (26) integral with and projecting from the tube (20), the end portion of the fin (26) which is remote from the tube (20) being secured to the outer surface portion (16) of the body portion by a joint (30) which gives good thermal contact between the fin (26) and the body portion (12).

4. A mould portion according to claim 3, characterised in that the end portion of the fin (26) which is remote from the tube (20) is received in a groove (28) in the outer surface portion (16) of the body portion (12) and is joined by solder (30) to surface portions of the groove (28).

5. A mould portion according to either one of claims 3 and 4, characterised in that selected portions of the fin (26) are cut away so that the cooling effect of the mould cooling means is varied along the length of the tube (20).

6. A mould portion according to any one of claims 3, 4 and 5, characterised in that selected portions of the fin (26) have metal pads (36) secured to them by joints which give good thermal contact between the fin (26) and the pads (36) so that the cooling effect of the mould cooling means is varied along the length of the tube (20).

7. A mould portion according to any one of claims 3, 4, 5 and 6, characterised in that the length of the fin (26) increases along the length of the tube (20) so that the cooling effect of the mould cooling means is varied along the length of the tube (20).

8. A mould portion according to any one of claims 3, 4, 5, 6 and 7 characterised in that the mould cooling means comprises a plurality of metal tubes (20) arranged to receive flowing cooling liquid each tube (20) having a metal fin (26) integral with and projecting radially of the tube (20), the end portion of each fin (26) which is remote from its tube (20) being secured to the outer surface (16) of the mould portion by joints which give good thermal contact between the fins (26) and the body portion.

9.    A mould portion according to claim 8, characterised in that the rate of flow of cooling liquid is controllable separately for each of the tubes (20).

10.    A mould  portion according to either one of claims 8 and 9, characterised in that one or more of the fins (26) are bent so that the overall width of the mould portion is reduced.

1/1

Fig_1

Fig_2

Fig_3

Fig_4

Fig_5

European Patent
Office

**EUROPEAN SEARCH REPORT**

0078665

Application number

EP 82 30 5725

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | C 03 B 9/38 |
| A | US-A-3 844 753 (HUEBNER) *The whole document* | 1 | |
| | --- | | |
| A | DE-A-2 730 262 (HERMANN HEYE) *Figures 14,15; page 13* | 1 | |
| | --- | | |
| A | US-A-3 887 350 (JENKINS) *The whole document* | 1 | |
| | --- | | |
| A | FR-A-2 260 076 (MONTAGNE) *Figures 1-4; pages 4,5* | 1 | |
| | ------ | | |

TECHNICAL FIELDS
SEARCHED (Int. Cl. ³)

C 03 B 9/00
C 03 B 11/00

The present search report has been drawn up for all claims

| Place of search THE HAGUE | Date of completion of the search 27-01-1983 | Examiner VAN DEN BOSSCHE W.L. |
|---|---|---|